# EUROPÄISCHE PATENTANMELDUNG

(11) **EP 1 830 074 A1**
(43) Veröffentlichungstag der Anmeldung: **05.09.2007**
(21) Anmeldenummer: 06110619.1
(22) Anmeldetag: 03.03.2006
(51) Int. Cl.: F16B 7/04, F16B 12/40, A47B 96/14

(54) **Wandschienensystem**

(71) Anmelder: Element -System Rudolf Bohnacker GmbH, 89616 Rottenacker (DE)
(72) Erfinder: Haarmann, Wolfram, 72793 Pfullingen (DE)
(74) Vertreter: Betten & Resch

(57) **Zusammenfassung**

Ein Wandschienensystem für ein Regalsystem oder dgl weist wenigstens eine als U-förmiges Profil ausgebildete Wandschiene (10) mit einem an einer Wand (50) befestigbaren Rückenteil (12) und zwei von der Wand abgewandten Seitenschenkeln (14) sowie einem an der der Wand zugewandten Seite des Rückenteils (12) sich in Längsrichtung erstreckendem rückseitigen Hohlraum (15) und wenigstens ein Verbindungselement (20) zur Verbindung zweier in Längsrichtung aneinanderstoßender Wandschienen (10) auf, welches Verbindungselement (20) in einem verbundenen Zustand der zwei Wandschienen in dem rückseitigen Hohlraum (15) aufgenommen ist Das Verbindungselement (20) sorgt für eine sichere Verbindung, Fixierung und Ausrichtung der Schienen zueinander, ohne in den Nutzraum zwischen den Seitenschenkeln und der Rückseite des U-Profils einzugreifen.

## Beschreibung

### Gebiet der Erfindung

Die Erfindung betrifft ein Wandschienensystem zum Einhängen von Regalbodenträgern oder dergleichen, um ein flexibles, vielseitig einsetzbares Regalsystem zu bilden

### Hintergrund der Erfindung

Derartige bekannte Regalsysteme werden vielfältig genutzt und haben sich im privaten und gewerblichen Einsatz bspw, für die großflächige Ablage von Büchern, Waren, Akten und dergleichen bewährt Da solche Regalsysteme nach oben und zur Seite beliebig erweitert werden können, weisen sie eine große Flexibilität auf

In manchen Fällen, insbesondere bei gewerblichen Anwendungen sind durchaus Regalhöhen von drei Metern, vier Metern oder mehr üblich Aus Transport-, Lagerund Handhabungsgründen sind jedoch Wandschienen von mehr als 1,5 bis 2 Meter Länge unpraktisch und ungebräuchlich Es ist daher notwendig, zwei oder mehrere Wandschienen übereinander anzubringen Es besteht daher ein Bedarf an Befestigungsmitteln, zwei in Längsrichtung aneinander stoßende Wandschienen zueinander auszurichten und miteinander zu befestigen

Ein verbreiteter Typ von vertikalen Wandschienen sind sogenannte U-Profilschienen, bei denen ein mit der Wand paralleles Rückenteil an der Wand befestigt wird, von welchem Rückenteil zwei seitliche Schenkel nach vorne vorstehen. Die Schenkel können Löcher, Öffnungen oder dergleichen zum Einhängen von Regalbodenträgern oder Ähnlichem oder vertikale Einkerbungen zum Führen von beweglichen Halteelementen oder Ähnlichem aufweisen, Um die Nutzung der U-Profilschiene nicht einzuschränken, sollte der zwischen Rückenteil und Seitenschenkeln gebildete Raum möglichst wenig eingeschränkt werden.

### Zusammenfassung der Erfindung

Der vorliegenden Erfindung liegt daher die Aufgabe zugrunde, ein Wandschienensystem mit wenigstens einer Wandschiene und einem Verbindungselement vorzuschlagen, welches eine sichere Fixierung zweier in Längsrichtung aneinanderstoßender U-Profil-förmiger Wandschienen sowie eine Ausrichtung der Wandschienen zueinander erlaubt, ohne dass der zwischen den Seitenschenkeln und dem Rückenteil des U-Profils gebildete Nutzraum wesentlich eingeschränkt wird.

Zur Lösung dieser Aufgabe wird erfindungsgemäß ein Wandschienensystem vorgeschlagen aufweisend wenigstens eine als U-förmiges Profil ausgebildete Wandschiene mit einem an einer Wand befestigbaren Rückenteil und zwei von der Wand abgewandten Seitenschenkeln sowie einem an der der Wand zugewandten Seite des Rückenteils sich in Längsrichtung erstreckenden rückseitigen Hohlraum und einem Verbindungselement zur Verbindung zweier in Längsrichtung aneinanderstoßender Wandschienen, welches Verbindungselement in einem verbundenen Zustand der Wandschienen in dem rückseitigen Hohlraum aufgenommen ist

Das Verbindungselement fixiert so die beiden an ihren Endseiten aneinanderstoßenden Wandschienen Da es jedoch in dem zur Wandseite ausgebildeten Hohlraum hinter dem Rückenteil der Wandschiene aufgenommen ist, ragt das Verbindungsteil nicht in den Nutzraum hinein, der zwischen den beiden Seitenschenkeln und der Rückwand der U-Profil-förmigen Wandschiene gebildet wird. Das Verbindungselement beeinträchtigt daher nicht die Befestigung oder vertikale Bewegung von Halteelementen oder dergleichen, Die Wandschiene kann so äußerst kompakt ausgebildet sein.

Gemäß einem bevorzugten Ausführungsbeispiel weist die Wandschiene an wenigstens einem längsseitigen Ende erste und zweite Öffnungen und das Verbindungselement beidseitig erste und zweite Vorsprünge zum Eingriff in die in der Wandschiene ausgebildeten Öffnungen auf Durch den Eingriff der Vorsprünge des Verbindungselements in die jeweiligen Öffnungen der Wandschienen werden diese miteinander verbunden und aneinander fixiert.

Die erste Öffnung kann vorzugsweise als quer zur Längsrichtung der Wandschiene ausgeformter Schlitz und die ersten Vorsprünge endseitig des Verbindungselements zum Eingriff in die quer ausgebildeten Schlitze aneinanderstoßender Wandschienen ausgebildet sein, wodurch eine relative Positionsfixierung der Wandschienen in Längsrichtung bewirkt wird.

Weiterhin kann vorzugsweise die zweite Öffnung als eine endseitig der Wandschiene ausgeformte, im Wesentlichen rechteckförmige Ausnehmung und die zweiten Vorsprünge des Verbindungselements mittig zum Eingriff in diese zweiten Öffnungen ausgebildet sein, wodurch eine Positionierung der Wandschienen zueinander in Querrichtung bewirkt wird

Durch die Kombination von schlitzförmiger Ausnehmung zur Positionierung in Längsrichtung und rechteckförmiger Ausnehmung zur Positionierung in Querrichtung kann mit einem platzsparenden, leichten und sehr preiswert herzustellenden Verbindungselement eine sichere Positionsfixierung sowohl in Längsrichtung als auch in Querrichtung und auch eine Ausrichtung der Schienen zueinander erreicht werden

Das Verbindungselement kann vorzugsweise als längliches, flaches Metallelement mit den beidseitigen ersten und zweiten Vorsprüngen ausgebildet sein Dieses ist leicht, klein und kostengünstig herzustellen,

Die endseitigen ersten Vorsprünge des Verbindungselements können dabei einen Winkel von zwischen 60° und 85°, vorzugsweise zwischen 75° und 850° gegenüber der Grundebene des Verbindungselements aufweisen, welche Grundebene parallel zur Wand und zur Ebene des Rückenteils der U-Profilschiene ist. Diese Anwinkelung erleichtert die Montage und Fixierung zweier Wandschienen miteinander und bewirkt eine elastische Kraft, die die beiden Schienen miteinander verbindet

Gemäß einem bevorzugten Ausführungsbeispiel sind die beiden mittigen Vorsprünge des Verbindungselements durch eine kleine Einkerbung oder "Sicke" miteinander verbunden, die die Stabilität des Verbindungselements erhöht.

### Kurze Beschreibung der Zeichnungen

Die Erfindung wird im Folgenden anhand eines konkreten Ausführungsbeispiels unter Bezugnahme auf die beiliegenden Zeichnungen erläutert
Figur 1 zeigt ein Ausführungsbeispiel des erfindungsgemäßen Wandschienensystems in Horizontalschnittansicht
Figur 2 zeigt ein Ausführungsbeispiel des erfindungsgemäßen Verbindungselements in Seitenansicht
Figur 3 ist eine Ansicht von vorne, die zwei endseitig aneinanderstoßende Wandschienen gemäß einem Ausführungsbeispiel der Erfindung zeigt.
Figur 4 ist eine Rückseitenansicht zweier mittels Verbindungselement miteinander verbundener Wandschienen.
Figur 5 ist eine Vertikalschnittansicht eines Ausführungsbeispiels des erfindungsgemäßen Wandschienensystems

### Detaillierte Beschreibung der Erfindung

Die Erfindung wird im Folgenden anhand von konkreten Ausführungsbeispielen im Detail erläutert.

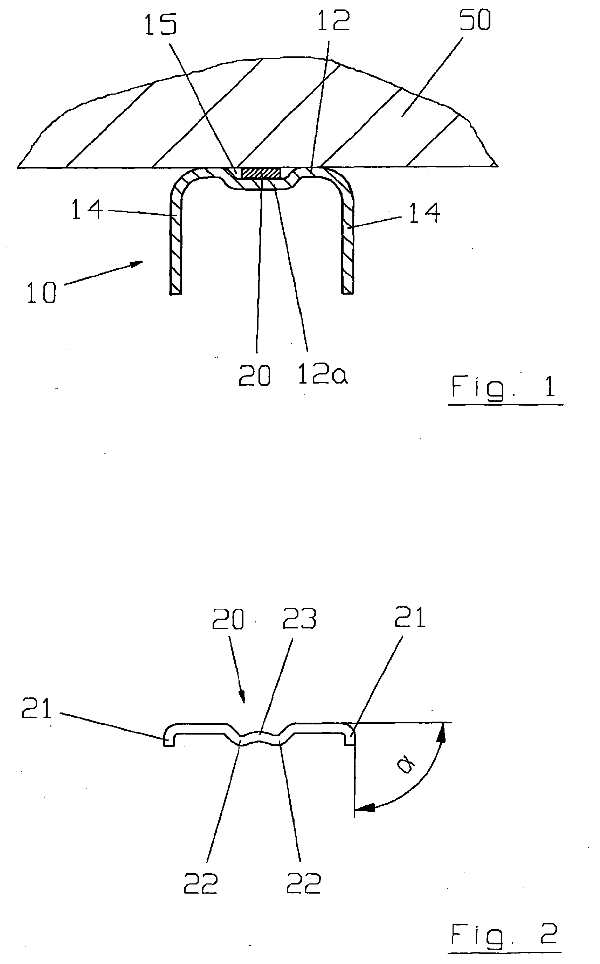

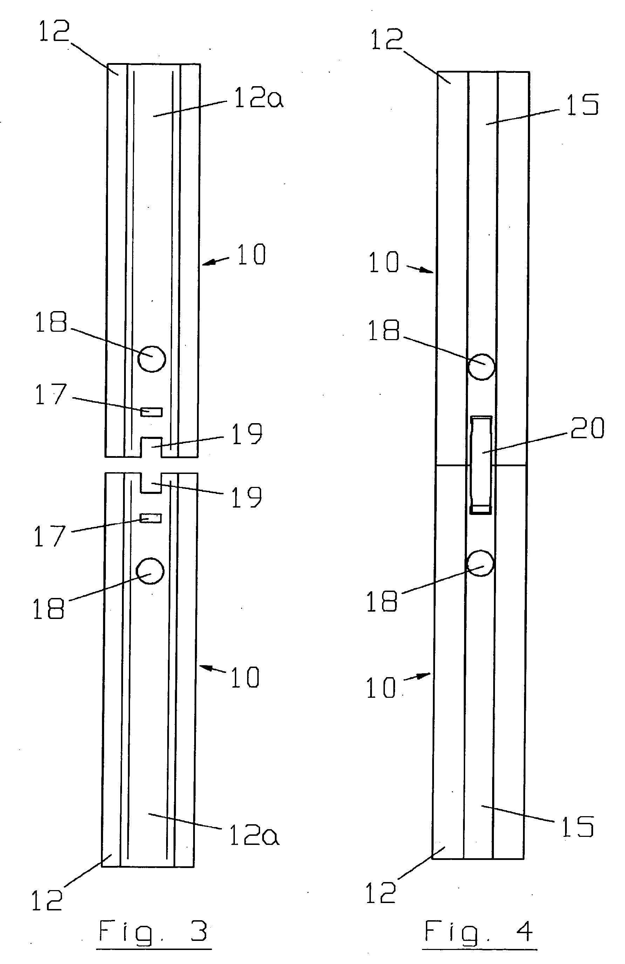

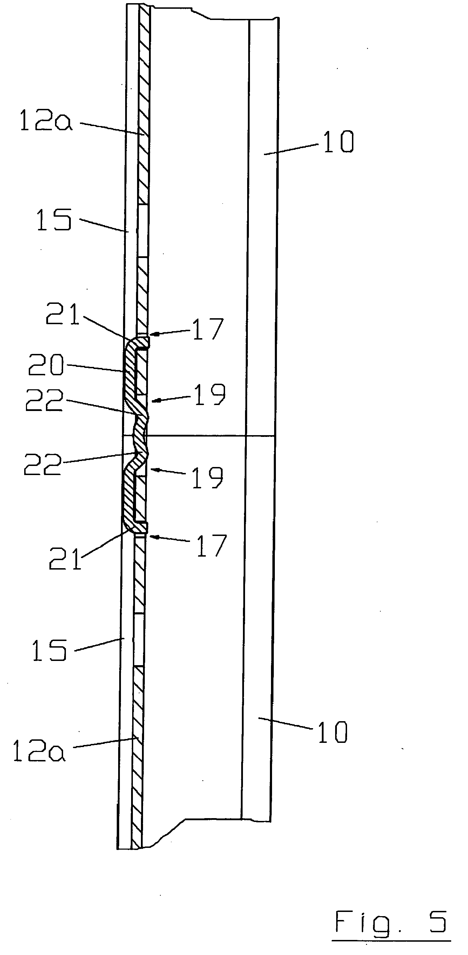

Figur 1 zeigt in Horizontalschnittansicht ein Ausführungsbeispiel des erfindungsgemäßen Wandschienensystems Dieses besteht aus einer U-Profil-förmigen Wandschiene 10 sowie einem Verbindungselement 20 zum Verbinden zweier an ihren längsseitigen Enden zusammenstoßender Wandschienen (Figuren 3-5), um so zwei oder mehrere Wandschienen übereinander an einer Wand, Stellwand, einem Gestell oder dergleichen anbringen zu können Die Wandschiene ist insgesamt als U-förmiges Profil mit einem an einer Wand 50 fixierbaren Rückenteil 12 sowie zwei von der Wand abstehenden Seitenschenkeln 14 ausgebildet An den vorderen, der Wand abgewandten Enden der Seitenschenkel 14 können Nuten, vorragende Abschlusselemente oder Schienen oder dergleichen zur Aufnahme von Gleitelementen oder horizontal verschiebbaren Tragelementen ausgebildet sein Die Form und Ausbildung der Seitenschenkel 14 spielt für die vorliegende Erfindung keine Rolle.

Das an der Wand bspw mittels Schrauben befestigbare Rückenteil 12 der Wandschiene 10 weist einen nach vorne (d. h von der Wand weg) vorspringenden Abschnitt 12a auf, der auf der Wandseite einen Hohlraum 15 bildet. In diesem Hohlraum 15 ist das Verbindungselement 20 zur Verbindung zweier senkrecht aneinanderstoßender Profilschienen 10 aufgenommen

Figur 2 zeigt ein Ausführungsbeispiel eines erfindungsgemäßen Verbindungselements 20. Dieses ist als ein insgesamt längliches Blechteil ausgebildet und weist zwei endseitige Vorsprünge 21 sowie zwei mittige Vorsprünge 22 auf. Die beiden mittigen Vorsprünge 22 sind über eine Kerbe oder "Sicke" miteinander verbunden. Eine andere Form der ittleren Vorsprünge ist jedoch ebenfalls möglich. Die endseitigen Vorsprünge 21 können senkrecht zur Hauptebene des Verbindungselements, die parallel zur Ebene der Wand bzw des Rückenteils 12 der Wandschiene 10 ist, ausgebildet sein oder vorzugsweise einen Winkel α gegenüber dieser Hauptebene von zwischen 60° und 85°, vorzugsweise zwischen 75° und 85° aufweisen. Durch diese Winkelstellung wird die Montage des Verbindungselements sowie der Wandschienen erleichtert. Außerdem kann das aus einem elastischen Material wie Stahlblech ausgebildete Verbindungselement 20 eine elastische anziehende Kraft auf die beiden zu verbindenden Wandschienen ausüben

Figur 3 zeigt zwei endseitig aneinanderstoßende Wandschienen 10 gemäß einem Ausführungsbeispiel der vorliegenden Erfindung in Ansicht von vorne, d. h. in Blickrichtung auf die Wand hin und Figur 4 zwei durch ein Verbindungselement 20 miteinander verbundene Wandschienen 10 in Ansicht von hinten.

Die Wandschienen 10 weisen in ihrem Rückseitenabschnitt jeweils einen nach vorne vorspringenden Mittelabschnitt 12a auf, der auf seiner (wandseitigen) Rückseite einen Hohlraum 15 bildet. In diesem Hohlraum 15 ist das Verbindungselement 20 zur Verbindung zweier endseitig aneinanderstoßender Wandschienen 10 aufgenommen, wie in Figuren 1, 4 und 5 gezeigt ist. Im Mittelabschnitt 12 a der Wandschiene 10 können Löcher 18 zur Fixierung der Wandschiene an der Wand vorgesehen sein

In dem nach vorne vorstehenden Mittelabsctrnitt 12a sind außerdem nahe dem längsseitigen Ende der Wandschiene 12 zwei Öffnungen 17, 19 ausgeformt Die erste Öffnung 17 ist als in Querrichtung ausgeformter Schlitz ausgebildet, während die zweite Öffnung 19 rechteckförmig am Ende des Mittelabschnitts 12a ausgebildet ist Um zwei Wandschienen miteinander zu verbinden greifen die endseitigen Vorsprünge 21 des Verbindungselements 20 in die Querschlitze 17 ein und bewirken so eine Fixierung der Wandschienen zueinander in Längsrichtung (siehe auch Figur 5). Die mittigen Vorsprünge 22 des Verbindungselements 20 greifen in die beiden aneinanderliegenden Öffnungen 19 ein und bewirken eine Fixierung der beiden Schienen zueinander in Querrichtung. Der positionsgenaue Eingriff des länglichen Verbindungselements 20 an insgesamt vier Stellen bewirkt außerdem eine parallele Ausrichtung der beiden U-förmigen Wandschienen 10 zueinander

Der Fachmann erkennt, dass die exakte Form des Verbindungselements 20 mit den Vorsprüngen 21, 22 sowie die genaue Form und Position der Öffnungen 17, 19 in der Wandschiene 10 im Rahmen der vorliegenden Erfindung variieren kann

Die Erfindung liefert somit ein Wandschienensystem mit einer Wandschiene sowie einem Verbindungselement, welches eine sichere Verbindung, Fixierung und Ausrichtung der Schienen zueinander ermöglicht, ohne in den Nutzraum zwischen den Seitenschenkeln und der Rückseite des U-Profils einzugreifen. Die Erfindung liefert damit eine sehr leichte, kompakte und eine einfache Montage ermöglichende Befestigungslösung.

## Patentansprüche

1. Wandschienensystem aufweisend:
wenigstens eine als U-förmiges Profil ausgebildete Wandschiene (10) mit einem an einer Wand (50) befestigbaren Rückenteil (12) und zwei von der Wand abgewandten Seitenschenkeln (14) sowie einem an der der Wand zugewandten Seite des Rückenteils (12) sich in Längsrichtung erstreckenden rückseitigen Hohlraum (15), und
wenigstens ein Verbindungselement (20) zur Verbindung zweier in Längsrichtung aneinanderstoßender Wandschienen (10), welches Verbindungselement (20) in einem verbundenen Zustand der zwei Wandschienen in dem rückseitigen Hohlraum (15) aufgenommen ist

2. Wandschienensystem nach Anspruch 1, wobei die Wandschiene (10) an wenigstens einem längsseitigen Ende im Rückenteil (12) erste und zweite Öffnungen (17, 19) und das Verbindungselement (20) beidseitig erste und zweite Vorsprünge (21, 22) zum Eingriff in die in der Wandschiene ausgebildeten Öffnungen (17, 19) aufweist.

3. Wandschienensystem nach Anspruch 2, wobei die erste Öffnung (17) als quer zur Längsrichtung der Wandschiene (10) ausgeformter Schlitz und die ersten Vorsprünge (21) des Verbindungselements (20) endseitig zum Eingriff in die ersten Öffnungen (17) aneinanderstoßender Wandschienen (10) ausgebildet sind und eine relative Positionsfixierung der Wandschienen (10) in Längsrichtung bewirken.

4. Wandschienensystem nach Anspruch 2 oder 3, wobei die zweite Öffnung (19) eine endseitig der Wandschiene (10) ausgeformte, im wesentlichen rechteckförmige Ausnehmung und die zweiten Vorsprünge (22) des Verbindungselements (20) mittig zum Eingriff in die zweiten Öffnungen (19) aneinanderstoßender Wandschienen (10) ausgebildet sind und eine Fixierung der Wandschienen (10) zueinander in Querrichtung bewirken

5. Wandschienensystem nach einem der Ansprüche 1 bis 4, wobei das Verbinungselement (20) als längliches, flaches Metallelement ausgebildet ist

6. Wandschienensystem nach Anspruch 5, wobei die beidseitigen ersten Vorsprünge (21) des Verbindungselements (20) einen Winkel von zwischen 60 ° und 85 °, vorzugsweise zwischen 75 ° und 85 ° gegenüber der zum Rückseitenabschnitt (12) der Wandschiene (10) parallelen Grundebene des Verbindungselements (20) aufweisen.

7. Wandschienensystem nach einem der Ansprüche 4 bis 6, wobei die mittigen zweiten Vorsprünge (22) des Verbindungselements (20) durch eine Einkerbung (23) miteinander verbunden sind.

8. Wandschienensystem nach einem der Ansprüche 1 bis 7, wobei der sich in Längsrichtung des Rückenteils (12) erstreckende rückseitige Hohlraum (15) durch einen nach vorne vorspringenden Mittelabschnitt (12a) des Rückenteils gebildet wird.

## Geänderte Patentansprüche

### Geänderte Patentansprüche gemäss Regel 86(2) EPÜ.

**1.** Wandschienensystem aufweisend:
wenigstens eine als U-förmiges Profil ausgebildete Wandschiene (10) mit einem an einer Wand (50) befestigbaren Rückenteil (12) und zwei von der Wand abgewandten sich von dem Rücckenteil (12) nach vorne erstreckenden Seitenschenkeln (14) sowie einem an der der Wand zugewandten, hinteren Seite des Rückenteils (12) sich in Längsrichtung erstreckenden rückseitigen Hohlraum (15), und
wenigstens ein Verbindungselement (20) zur Verbindung zweier in Längsrichtung aneinanderstoßender Wandschienen (10), welches Verbindungselement (20) in einem verbundenen Zustand der zwei Wandschienen in dem rückseitigen Hohlraum (15) aufgenommen ist.

**2.** Wandschienensystem nach Anspruch 1, wobei die Wandschiene (10) an wenigstens einem längsseitigen Ende im Rückenteil (12) erste und zweite Öffnungen (17, 19) und das Verbindungselement (20) beidseitig erste und zweite Vorsprünge (21, 22) zum Eingriff in die in der Wandschiene ausgebildeten Öffnungen (17, 19) aufweist.

**3.** Wandschienensystem nach Anspruch 2, wobei die erste Öffnung (17) als quer zur Längsrichtung der Wandschiene (10) ausgeformter Schlitz und die ersten Vorsprünge (21) des Verbindungselements (20) endseitig zum Eingriff in die ersten Öffnungen (17) aneinanderstoßender Wandschienen (10) ausgebildet sind und eine relative Positionsfixierung der Wandschienen (10) in Längsrichtung bewirken.

**4.** Wandschienensystem nach Anspruch 2 oder 3, wobei die zweite Öffnung (19) eine endseitig der Wandschiene (10) ausgeformte, im wesentlichen rechteckförmige Ausnehmung und die zweiten Vorsprünge (22) des Verbindungselements (20) mittig zum Eingriff in die zweiten Öffnungen (19) aneinanderstoßender Wandschienen (10) ausgebildet sind und eine Fixierung der Wandschienen (10) zueinander in Querrichtung bewirken.

**5.** Wandschienensystem nach einem der Ansprüche 1 bis 4, wobei das Verbinungselement (20) als längliches, flaches Metallelement ausgebildet ist.

**6.** Wandschienensystem nach Anspruch 5, wobei die beidseitigen ersten Vorsprünge (21) des Verbindungselements (20) einen Winkel von zwischen 60 ° und 85 °, vorzugsweise zwischen 75 ° und 85 ° gegenüber der zum Rückseitenabschnitt (12) der Wandschiene (10) parallelen Grundebene des Verbindungselements (20) aufweisen.

**7.** Wandschienensystem nach einem der Ansprüche 4 bis 6, wobei die mittigen zweiten Vorsprünge (22) des Verbindungselements (20) durch eine Einkerbung (23) miteinander verbunden sind.

**8.** Wandschienensystem nach einem der Ansprüche 1 bis 7, wobei der sich in Längsrichtung des Rückenteils (12) erstreckende rückseitige Hohlraum (15) durch einen nach vorne vorspringenden Mittelabschnitt (12a) des Rückenteils gebildet wird.
